# Europäisches Patentamt
# European Patent Office
# Office européen des brevets

(11) Publication number: **0 139 565**
**B1**

(12) **EUROPEAN PATENT SPECIFICATION**

(45) Date of publication of patent specification: **02.12.87**

(21) Application number: **84401875.4**

(22) Date of filing: **21.09.84**

(51) Int. Cl.⁴: **F 16 L 15/04,** E 21 B 17/042, F 16 L 15/00

(54) Conical thread configuration for rapid make-up connection.

(30) Priority: **26.09.83 US 535621**

(43) Date of publication of application:
**02.05.85 Bulletin 85/18**

(45) Publication of the grant of the patent:
**02.12.87 Bulletin 87/49**

(84) Designated Contracting States:
**AT BE CH DE FR GB IT LI LU NL SE**

(56) References cited:
**FR-A-2 529 991**
**US-A-4 346 920**

(73) Proprietor: **VETCO GRAY INC.**
**7135 Ardmore Road**
**Houston Texas 77054 (US)**

(72) Inventor: **Nobileau, Philippe C.**
**3 Jardins de Pomone**
**F-06340 Biot (FR)**

(74) Representative: **Robert, Jean-Pierre et al**
**CABINET BOETTCHER 23, rue la Boétie**
**F-75008 Paris (FR)**

Courier Press, Leamington Spa, England.

**Description**

The invention pertains to tubular connections, comprising tubular members mechanically interlocked in each other.

The object of the invention is to provide a strong, simple and extremely fast make-up connection, between sections of pipes of various diameters particularly suitable in the drilling industry to connect well casings, well conductor pipes, offshore platforms anchoring piles, wellhead to wellhead receptacle or B.O.P. stacks and offshore drilling risers.

In the early 60's Oil exploration and production went offshore and the limitations of the technical possibilities of standard threaded or flange connections were outlined by the increase in diameter of the connection required in offshore operation, the requirement of being able to remotely make-up and disconnect underwater connection, and the motions of the floating support where most of the offshore operations were taken place. Also the cost of field welding widely used onshore to connect sections of large pipe, become prohibitive due to the high hourly cost of offshore operations. In these early days, three types of connectors were introduced to solve these problems: First, a specialized generation of thread connector were designed, using modified conical thread, to extend the use of threaded casing connection larger than 40.6 cm (16") for operation from floating support. These threaded connectors are still widely used today, for dimensions below 60.9 cm (24"), despite the requirement of a minimum of two and a half turn rotation for make-up.

This rotation is commonly achieved either by the use of a hydraulic actuated power tong, said power tong requiring specialized crew to be operated, or the conventional "rope technic", said technic consisting of pulling on a soft rope from the drilling rig main winch capstan, said rope being rigged three to five turns around the add-on casing piece body, said pull approaching by rotation the pin and box members. Final make-up torque is reached by the use of a mechanical tong, said mechanical tong consisting of a large chain wrench having a lever extending radially to multiplicate the torque generated by the cathead chain hooked on the end of said lever, said cathead chain having the other end pulled by said drilling rig main winch.

Maximum amount of rotation achieved in one stroke of said mechanical tong/cathead chain assembly is around one quarter to one third of a turn without having to reset said assembly by manual reverse rotation.

A second connector for the larger diameter casing, threadless, was also introduced based on a snap-ring linkage. This "snap-ring type" connector offers fast make-up but does offer neither the low weight to capacity ratio, neither the rigidity, nor the price competitiveness of the threaded connector for a given capacity.

A third connector, featuring radial dogs, was introduced to replace flange connections, in a mechanical configuration for drilling riser connections, and in a hydraulic configuration for wellhead connections.

Recently, the use of dog type connectors has been extended to offshore platform anchoring pile connection, but its success has been limited, by its high cost, due to the large number of parts and heavy section required in the design and manufacturing of such a connector.

In the 70's, two other types of connectors were introduced:

First, a "L type" connector, featuring large dimensions threads or circular grooves, cylindrical or conical, said threads or grooves being milled out on at least two sections limited by cylindrical or conical generatrix, in order that make-up of the connector can be achieved by axial stabbing, followed by a rotation of a fraction of a turn to bring the remaining portions of threads or grooves in an interlocking configuration. The make-up rotation is limited to a maximum of a quarter of a turn.

The major drawback of this connector, despite the fast make-up characteristics, is the cost of manufacturing, due to the extensive milling operation and the capacity to weight ratio, due to the removal of 50 % of the loading surfaces.

The second connector is a no rotation "interference type" connector mainly designed for permanent application such as offshore platform conductor pipe or anchoring pile. It presents the major drawbacks of not being disconnectable and requiring a special bulky hydraulic clamping unit, operated by specialized crew, for making-up.

The features of the pre-characterising part of claim 1 are disclosed in US—A—4346920.

Moreover the number n of thread head entries is preferably atmost equal to

$$(AD) \times (p) \times \frac{1}{6,25}$$

in which:
— (AD) is the average diameter of the frustoconical surface bearing the threads (in inches)
— (p) is the number of threads per inch.

The immediate result of the invention is the possibility, after stabbing the pin and box members, to obtain full make-up of the pin and box threads by only a rotation of a fraction of a turn, while the entire length of threads is fully engaged over the entire periphery of the interlocking surfaces, since in the preferred case, each thread extends over more than one turn and preferably over at least two turns. This said fraction of a turn make-up being at most one half of a turn, and at least one half of a turn divided by (n).

The conical thread configuration, according to the invention, combines the advantage of the "L type" connectors, i.e. featuring complete make-up by axial stabbing followed by a rotation of a fraction of a turn, without having the drawback thereof, namely, the low capacity on weight ratio and high manufacturing coast, and the advantage of the specialized threaded connector, i.e. high capacity on weight ratio and low manufacturing cost, without having the drawback of requiring power tong or even the rope phase since in the preferred case, only one stroke of the mechanical tong/cathead chain assembly is required to fully make-up the connector.

The fraction of a turn make-up allows the thread configuration of the invention to be used in numerous types of connection, whether they are made-up manually or by means of hydraulic cylinders for remote control.

In a particular embodiment, the box member may serve as means for connecting a wellhead connector on a wellhead housing. In this case, the pin member may be the wellhead housing with (n) threads on its conical outer upper part. The box member is swivelling on the stationary wellhead connector body, said body is receiving hinged hydraulic cylinders, said cylinders include rods connected to the box member in order to drive said box member in rotation with regard to said stationary wellhead connector body.

This feature is very relevant of the invention, since only the known rigid "dog type" connector box assembly has been successfully remotely controlled by the addition of a cam ring operated by vertical hydraulic cylinders said "dog type" connector box assembly comprises numerous parts beside the cylinders: dogs, cam, ring, etc., while the remotely actuated connector according to the invention has a box assembly which comprises only two parts: the wellhead connector body and the swivelling box member beside the cylinder.

A conical thread configuration, according to the invention, where the number of thread lead entries can increase with the diameter while retaining the self-locking characteristics of low angle spiral threads, allows to limit the peripheral displacement of the box member with regard to the pin member while being stab with the proper orientation, to less than 30" in the preferred case.

This feature permits for connecting large section of pipe and in particular offshore platform anchoring pile, said anchoring pile ranging from 30" to 96" in diameter, the possible use a tightening device comprising a 10 tons, 20" stroke hand carried, hydraulic cylinder and a belt of length equal to four times the connector diameter, said cylinder being bolted on the pin member in a cantilevered position, approximately at the level of the pin/box outside boundary, the rod of said cylinder extending radially away from the members axis, said rod including a fork with a roller, said roller having its axis parallel to the connector axis, said belt is wrapped around the connector approximatively at said pin/box boundary level, said belt being bolted respectively to the pin and box members, said bolts being located close to the pin/box boundary to minimise the angle of helicoidal shape of the belt, said belt passing over said roller so that when pressurised fluid is injected into said cylinder, the said rod extends and tensions said belt which rotates the connector members with regard to each others to obtain make-up or disconnection of said connector.

The invention will be more readily understood by reading the following description with reference to the following accompanying drawings:

Fig. 1 is a view in elevation of the connector according to the invention before stab-in.

Fig. 2 shows partial sectional view of the connector after stab-in.

Fig. 3 is an enlarged partial view after make-up in a non interference type connector.

Fig. 4 is a partial enlarged view of a variant of Fig. 2.

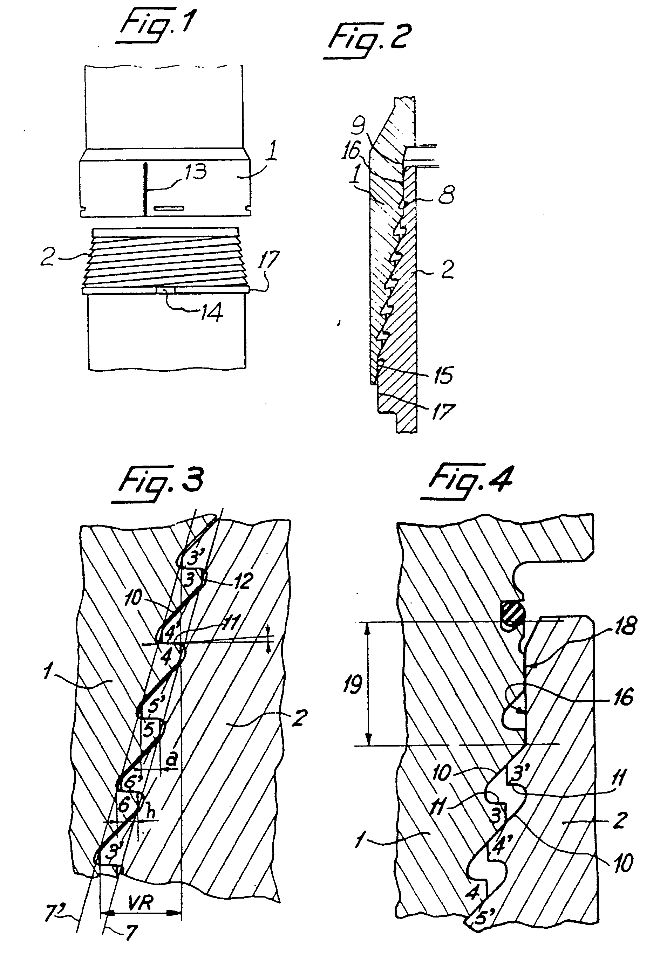

Referring now to the drawings, the connector of Figs. 1 to 4 comprises a box member 1 and a pin member 2. In the example shown, the members are connected by means of four threads 3, 4, 5 and 6 for the box, and 3', 4', 5' and 6' for the pin 1.

In the Figure 3, the threads are shown engaged, the thread profile of the box 1, in an axial plane, comprises a stabbing flank 10, and a load flank 11 slightly raising toward the connector axis, both flank 10 and 11 being linked on one thread by a vertical thread crest 12. The thread profile of the pin 2 is identical to the thread profile of the box 1.

Each thread of the box 1 is cut out of a conical surface 7, each thread of the pin 2 being cut out of a conical surface 7'. When stabbing the box member 1 over the pin member 2, on Figure 4, the thread 3 of the box 1 just clears the crest of the thread 3' of the pin 2 and the stabbing flank 10 of the thread 3 lands on the stabbing flank 10 of the thread 4'.

Since there are four threads, a rotation of a quarter of a turn of the box, the pin staying stationary, decreases the radius of the thread 4 of the box, said thread 4 slides on its stabbing flank 10, upwardly toward the member axis, until the load flank 11 of the thread 4 and 4' get in contact.

On the Figure 3 the dimension (a) represents the radial dimension of the engaged thread overlap and is smaller than the radial height (h) of the thread profile.

According to the invention, this dimension (a) is smaller than half of the variation (VR) of the radius of the conical surface 7 or 7' bearing the thread per one pitch. With this relationship, it is ensured that, independantly of the number of thread lead entries, it will need at most half of a turn to disengage the threads from the tight make-up position to the position where an actual separation of the members is possible.

In the embodiment of Figure 3, the dimension (a) is equal to the quarter of the variation (VR) and since there are four threads, only a quarter of a turn is needed to fully disengage the two members.

It should be pointed out that, in the case of Figure 3, (n) times the projection of one engaged thread overlap on a radial plan, corresponds exactly to the envelop of the projection of the engaged thread overlaps of all the threads. As a matter of fact, projection of engaged thread 4, 4' overlap is exactly adjacent to projection of engaged thread 3, 3' overlap and engaged thread 5, 5' overlap, after rounding up functional clearances and machining tolerances. The ratio between the addition of the projected engaged thread overlaps of each thread, and the envelop of the projection of the engaged thread overlaps of all the threads is a relevant criteria of the capacity of the connection.

So, if (a) is equal to

$$\frac{(VR)}{(n)},$$

(n) being the number of thread lead entries, the above defined ratio is equal to 1, preferred value for diameters larger than 16".

In case, (a) is greater than

$$\frac{(VR)}{n},$$

the above defined ratio is greater than 1 and the disconnection rotation is more than

$$\frac{1}{(n)}$$

turn. On another hand, with (a) smaller than

$$\frac{(VR)}{n}$$

the above defined ratio is smaller than 1 and the disconnection rotation less than 1/n turn. Generally, it is not recommended to select a value for (a) smaller than

$$\frac{(VR)}{2n}$$

since in this case, the total of the engaged thread overlap surfaces is less than one half of the projected envelop and the mechanical capacity of the connection is greatly reduced.

It can be deducted from the above, that by increasing the number of thread lead entries, the rotation angle to make-up the connection can be reduced but, for given diameter and dimension of thread, this number cannot be increased indefinitely without compromising the self-locking characteristic of the connection. In order to stay below the minimum friction coefficient of steel to steel lubricated surfaces of 0.06 it is recommended to limit the number of thread lead entries to equal to or less than

$$\frac{(A\,D) \times (p)}{6.25}$$

in which:

(A D) is the average diameter of the frustoconical surface bearing the threads in inches.

(p): number of threads per inch.

An example of the preferred configuration is for (AD)=20" and p=2.5, which leads to $2 \leqslant n \leqslant 8$. The frustoconical height will be sufficient, on each member 1 and 2 to allow a thread to intersect at least twice a determined generatrix of the frustoconical surface.

Connector members sealing may be ensured with the aid of well-known O-rings. An O-ring 8 has been shown in one groove of member 2. At the end of connection by rotation, the O-ring 8 slides on the vertical part 9 of the member 1.

To reduce the make-up rotation to a value close to the release rotation, a mark 13 can be located on the box 1. This mark will be lined-up with a milled portion 14 of the surface 17.

On Figure 2, it can be seen that a cylindrical surface 15 terminates the conical thread on the entry end of the box member 1. Similarly, a cylindrical surface 16 terminates the threaded part of the pin member 2. Said surfaces 15 and 16 are used for mutual axial alignment of the two members and to achieve this, the surface 15 rides on a mating surface 17 of the member 2 and the surface 16 rides on a mating surface 9 of the member 1. Figure 5 shows that mating surface 9 of Figure 2 is in fact an interrupted cylindrical surface 18 being, the result of truncating the crests of the threads of the box member on the area 19. An acceptable alignment is only possible if the number of the thread lead entries is at least equal to three. So the surface 16 while engaging into the area 19, finds always at least three centralizing alignment points.

It will be understood that a similar arrangement can be located between surfaces 15 and 17.

**Claims**

1. A coupling having a conical thread configuration over frusto-conical surfaces for providing strong simple and rapid make-up connection of tubular members (1, 2) particularly for connecting sections of pipes, casings and conductor pipes, anchoring pipes, wellheads and risers, particularly for offshore oil production, characterised in each member having a plurality of (n) thread lead entries, as is known pre se, (n) being at least equal to two, and the radial dimension (a) of the engaged thread overlap after make-up being smaller than the radial height (h) of the thread profile, as is known per se, and smaller than half of the variation (VR) of the radius of said frusto-conical surface (7, 7') which bears one thread pitch and larger than

$$(\frac{1}{2n})$$

of said variation (VR).

2. The coupling of claim 1 wherein the number of thread lead entries is at most equal to

$$(AD) \times (p) \times \dfrac{1}{6.25}$$

in which:
— (AD) is the average diameter of the frusto-conical surface bearing threads (in cms),
— (p) is the number of threads per cm.

3. The coupling of claim 1, wherein each thread intersects at least twice a determined generatrix of said frusto-conical surface.

4. The coupling of claim 1, wherein each thread includes a load flank (11) and a stabbing flank (10) and when one member is located under the other member, each load flank offers a slope raising towards the axis of the members.

5. The coupling according to claim 1, wherein the number of thread lead entries is at least equal to 3, each of said members includes one cylindrical surface (15, 16) terminating the threaded section on the stab-in end, said cylindrical surface of one member riding, for members alignment, prior to make-up rotation, on a mating surface of the second member, at least one of said mating surfaces (18) being at an end section of said threads, said section having the thread crests truncated cylindrically.

6. The coupling according to claim 5 when said at least one of the mating surfaces (18) is located on the outer member (1).

## Patentansprüche

1. Kupplung mit konischer Gewindekonfiguration auf Kegelstumpfflächen zur Herstellung einer festen, einfachen Schnellverbindung rohrförmiger Glieder (1, 2), insbesondere zur Verbindung von Rohrabschnitten, Gehäusen, Leitungsrohren, Ankerrohren, Bohrköpfen und Zwischenstücken, insbesondere bei der Unterwasser-Ölgewinnung, dadurch gekennzeichnet, daß jedes Glied eine Mahrzahl von (n) Gewindegangeingängen aufweist, wie an sich bekannt ist, wobei (n) wenigstens gleich zwei ist, und daß die radiale Abmessung (a) der in Eingriff befindlichen Gewindeüberlappung nach Herstellung der Verbindung kleiner als die radiale Höhe (h) des Gewindeprofiles, wie an sich bekannt, und kleiner als die Hälfte der Variation (VR) des Radius besagter Kegelstumpffläche (7, 7'), welche eine Gewindesteigung trägt, sowie größer als (1/2n) dieser Variation (VR) ist.

2. Kupplung nach Anspruch 1, bei der die Zahl der Gewindegangeingänge höchstens gleich (AD) × (p) × 1/6,25 ist, wobei (AD) der mittlere Durchmesser der gewindetragenden Kegelstumpffläche (in cm) und (p) die Zahl der Gewinde pro cm ist.

3. Kupplung nach Anspruch 1, bei der jedes Gewinde eine bestimmte Erzeugende der Kegelstumpffläche wenigstens zweimal schneidet.

4. Kupplung nach Anspruch 1, bei der jedes Gewinde eine Belastungsflanke (11) und eine Einsteckflanke (10) einschließt und, wenn ein Glied unter dem anderen Glied angeordnet ist, jede Belastungsflanke eine Neigung aufweist, die zur Achse der Glieder hin ansteigt.

5. Kupplung nach Anspruch 1, bei der die Zahl der Gewindegangeingänge wenigstens gleich drei ist, und jedes Glied eine zylindrische Fläche (15, 16) einschließt, die den Gewindebereich am eingesteckten Ende begrenzt, wobei die zylindrische Fläche eines Gliedes zum Zwecke der Ausrichtung der Glieder vor der zusammenliegenden Drehung auf einer dazu passenden Fläche des zweiten Gliedes aufsitzt, wenigstens eine dieser ineinanderpassenden Flächen (18) an einem Endabschnitt der Gewinde liegt und dieser Abschnitt zylindrisch abgestumpfte Gewindekränze aufweist.

6. Kupplung nach Anspruch 5, bei der wenigstens eine der zueinanderpassenden Flächen (18) an äußeren Glied (1) angeordnet ist.

## Revendications

1. Raccord ayant un filetage conique sur des surfaces tronconiques pour la réalisation d'un raccordement serré simple et rapide d'éléments tubulairs (1, 2), en particulier pour raccorder des tronçons de tubes, tubages, et de tubes-guide, des piles d'ancrage, des têtes de puits et des colonnes montantes, notamment pour la production de pétrole au large, caractérisé en ce que chaque élément a une pluralité de n entrées de filets, comme cela est connu en soi, n étant égal au moins à deux, et en ce que la dimension radiale (a) du recouvrement de filets engagés après serrage est inférieure à la hauteur radiale (h) du profil de filet, comme cela est connu en soi, et est inférieure à la moitié de la variation (VR) du rayon de la surface tronconique (7, 7') qui porte un pas de filet et supérieure à la fraction

$$\dfrac{(1)}{2n}$$

de cette variation (VR).

2. Raccordement selon la revendication 1, caractérisé en ce que le nombre d'entrées de filets est au plus égal à

$$(AD) \times (p) \times \dfrac{1}{6,25}$$

dans laquelle,
— (AD) est le diamètre moyen de la surface tronconique qui porte les filets (en cm),
— (p) est le nombre de filets par cm.

3. Raccordement selon la revendication 1, caractérisé en ce que chaque filet coupe au moins deux fois une génératrice déterminée de la surface tronconique.

4. Raccordement selon la revendication 1, caractérisé en ce que chaque filet comporte un flanc de charge (11), et un flanc de guidage (10), et quand un élément est situé sous l'autre, chaque flanc de charge présente une pente s'élèvant en direction de l'axe des éléments.

5. Raccordement selon la revendication 1, caractérisé en ce que le nombre d'entrées de filets est au moins égal à trois, chacun des éléments susdits possédant une surface cylindrique (15, 16) terminant la section filetée du côté de son extrémité d'emmanchement, ladite surface cylindrique de l'un des éléments coulissant pour aligner les dits éléments, avant rotation de blocage, sur une surface de guidage du second élément, au moins l'une desdites surfaces de guidage (18) étant dans une partie d'extrémité desdits filetages, ladite partie possédant les crêtes de filets cylindriquement tronqués.

6. Raccordement selon la revendication 5, caractérisé en ce qu'au moins ladite surface de guidage (18) est située sur l'élément extérieur (1).

Fig.1

Fig.2

Fig.3

Fig.4